# EUROPÄISCHE PATENTSCHRIFT

(11) **EP 1 470 025 B1**
(45) Veröffentlichungstag und Bekanntmachung des Hinweises auf die Patenterteilung: **25.02.2009**
(21) Anmeldenummer: 02779188.8
(22) Anmeldetag: 30.10.2002
(51) Int. Cl.: B60R 11/00

(54) **ELEKTRISCHES GERÄT ZUM ANBRINGEN AN EINER HALTERUNG UND HALTERUNG HIERFüR**
ELECTRICAL APPLIANCE TO BE MOUNTED ON A RETAINER
APPAREIL ELECTRIQUE DESTINE A ETRE ATTACHE A UN SUPPORT ET SUPPORT ASSOCIE

(30) Priorität: 18.01.2002 DE 10202034
(43) Veröffentlichungstag der Anmeldung: 27.10.2004
(73) Patentinhaber: ROBERT BOSCH GMBH, 70442 Stuttgart (DE)
(72) Erfinder: GEELHAAR, Bernd, 31137 Hildesheim (DE); KNOCHENHAUER, Peter, 31141 Hildesheim (DE)
(86) Internationale Anmeldenummer: PCT/DE2002/004040
(87) Internationale Veröffentlichungsnummer: WO 2003/059693

(56) Entgegenhaltungen:
- EP-A- 0 960 781
- WO-A-00/38951
- DE-A- 2 558 950
- FR-A- 1 577 298
- US-A- 3 134 945
- US-A- 4 180 299
- US-A- 4 627 589
- US-A1- 2001 012 359

## Beschreibung

### Stand der Technik

Die Erfindung geht aus von einem elektrischen Gerät zum Anbringen an einer Halterung nach der Gattung des Hauptanspruchs. Es ist schon eine Halterung insbesondere für einen Monitor in einem Fahrzeug aus der US 5,288,049 bekannt. Hierbei wird ein elektrisches Gerät in Form eines Monitors in eine an einem Fahrzeugdach angeordnete Klammer eingeschoben und nach dem Einschieben über ein Schloss arretiert. Bei der Montage des Monitors muss dieser entlang des gesamten Schiebeweges, also entsprechend seiner Länge, entlang der Klammer bewegt werden. Darüber hinaus muss bei der Montage der Monitor über dem Kopf des Monteurs passgenau in die für die Halterung vorgesehene Klammer eingeführt werden.

Aus der US 4,180,299 ist eine Haltevorrichtung für Kassetten und für ein Funkgerät bekannt, die an einem Fahrzeugdach anbringbar ist. Eine Unterseite der Haltebox kann um eine Achse herausgeschwenkt werden, so dass das Innere der Haltebox zugänglich ist. Die Haltebox wird an der Halterung dadurch gesichert, dass ein Vorsprung in eine Öffnung geschoben wird und zwei Klemmen, die an der Halterung angeordnet sind, an der Halterung verriegeln. Um die Haltebox zu öffnen, ist ein weiterer, mittig angeordneter Riegel vorgesehen.

Aus der US 4,627,589 ist ein elektronisches Gerät bekannt, das an einer Montageplatte befestigbar ist. Das elektrische Gerät wird in eine Vertiefung am Rand der Montageplatte eingesetzt und durch Verschwenken mit der anderen Seite an eine Halterung bewegt, mit der ein federnd gelagertes Element des elektrischen Gerätes verrastet.

### Vorteile der Erfindung

Das erfindungsgemäße elektrische Gerät und die Halterung mit den Merkmalen des Hauptanspruchs haben dem gegenüber den Vorteil, dass das Gerät leicht an der zur Aufnahme vorgesehenen Halterung anbringbar ist. Hierzu wird das elektrische Gerät zunächst mit der Halterung über mindestens einen Haken verbunden, anschließend wird das
elektrische Gerät in dem Haken gegenüber der Halterung verschwenkt, so dass das Gerät in einer zweiten Verbindung mit der Halterung verriegelt. Eine Schiebebewegung, bei der zudem Verschleiß und Verschmutzung in Form von Abspanungen auftreten können, kann hierdurch vermieden werden, so dass die Montage erleichtert und die Haltbarkeit gegenüber einer Schienenlagerung erhöht wird. Zudem kann ein Monteur die Haken bei einem Einsetzen des elektrischen Geräts sehen, so dass das Einsetzen weiter vereinfacht wird. Ferner wird der für die Montage des elektrischen Gerätes benötigte Montageraum verringert, da das elektrische Gerät ummittelbar an der Halterung angesetzt werden kann, ohne einen Montageraum für einen Schiebevorgang in der Umgebung der Halterung vorsehen zu müssen.

Es ist ferner vorteilhaft, die Verriegelung insbesondere als eine verschließbare Klinkenwippe auszuführen, da diese einerseits in abgeschlossenem Zustand eine Entnahme des elektrischen Gerätes aus der Halterung verhindert und andererseits bei einem Einsetzen des elektrischen Gerätes in die Halterung vorzugsweise automatisch mit der Halterung verrastet.

Durch die in den Unteransprüchen aufgeführten Maßnahmen sind vorteilhafte Weiterbildungen und Verbesserungen des im Hauptanspruch angegebenen elektrischen Geräts und der Halterung möglich. Besonders vorteilhaft ist, den Haken für die erste Verbindung an dem elektrischen Gerät anzuordnen und eine Aufnahme für den Haken an der Halterung vorzusehen. Hierdurch wird vermieden, dass Haken aus der Halterung hervorstehen. Hierdurch wird eine Unfallgefahr durch hervorstehende Haken an der Halterung nach einer Entnahme des elektrischen Geräts aus der Halterung vermieden.

Weiterhin ist vorteilhaft, an der Aufnahme für den Haken einen Stift vorzusehen, der in ein für die Aufnahme des Stifts geeignetes Loch in den Haken eingreift. Hierdurch wird das elektrische Gerät gegenüber der Halterung zunächst gesichert, auch wenn die zweite Verbindung, also die Verriegelung, bereits gelöst ist. Ein plötzliches Verschwenken des elektrischen Geräts gegenüber der Halterung wird hierdurch vermieden.

Es ist ferner vorteilhaft, das elektrische Gerät mit einer Oberseite an einer Unterseite der Halterung anzubringen, da hierdurch eine Unterbaumontage für das elektrische Gerät ermöglicht wird, die wiederum einerseits einen hohen Einbauort ermöglicht und andererseits Bodenfläche für andere Verwendungen zugänglich macht.

Insbesondere ist eine Verriegelung vorteilhaft durch einen verschwenkbaren Riegel gebildet, der eine Kante der Halterung umgreift. Hierdurch ist eine sichere Halterung des elektrischen Gerätes gegenüber der Halterung gegeben, da einerseits von einer ersten Seite die Haken und von einer gegenüberliegenden Seite der Riegel in die Halterung eingreift. Vorteilhaft erfolgt die Verriegelung automatisch, sobald das bereits über die erste Verbindung mit der Halterung verbundene elektrische Gerät an einer Auflagefläche an der Halterung aufliegt.

Es ist ferner vorteilhaft, das elektrische Gerät mit einem Gehäuse und einem darin angeordneten elektrischen Bauteil auszuführen, wobei der Haken und die Rastvorrichtung an dem Gehäuse angeordnet sind. Dies ermöglicht, das elektrische Bauteil innerhalb des Gehäuses auszutauschen, so dass bei einem Ersetzen des elektrischen Bauteils nicht auch die Haltevorrichtung ersetzt werden muss.

Ferner ist vorteilhaft, das Gehäuse des elektrischen Gerätes zumindest teilweise mit einer Schutzschicht aus einem Kunststoffmaterial zu bedecken, die vorzugsweise aus einem weichen, aufgeschäumten und damit stossabsorbierenden Material gebildet ist. Einerseits können hierdurch Verletzungen von Benutzern durch Stöße an dem elektrischen Gerät vermieden werden, andererseits wird das elektrische Gerät vor einer Beschädigung und gegebenenfalls vor einer Korrosion geschützt.

Ferner ist vorteilhaft, an einer der Halterung zuweisenden Seite des elektrischen Gerätes einen Steckeranschluss anzuordnen. Dabei ist der Steckeranschluss nach Montage einer des elektrischen Gerätes vorzugsweise ohne ein Lösen der Verriegelung nicht mehr zugänglich, so dass die elektrische Verbindung des elektrischen Gerätes mit einer Versorgungsspannung und/oder einer Datenquelle vor einer Berührung gesichert ist.

Besonders vorteilhaft ist, das elektrische Gerät als eine Anzeigevorrichtung auszuführen, da das Anbringen an der Halterung eine sichere Lagerung z.B. auch in einem Fahrzeug ermöglicht. Insbesondere können die oftmals als hochwertige Bauteile ausgeführten Anzeigevorrichtungen gegen eine unberechtigte Entnahme gesichert werden. Zudem sind Anzeigevorrichtungen auch oftmals in hohen Positionen anzubringen, wobei insbesondere eine Unterbaumontage einer Anzeigevorrichtung ermöglicht wird.

Insbesondere ist vorteilhaft, eine Halterung zur Anordnung eines elektrischen Gerätes an der Unterseite eines Fahrzeugdachs, eines Gepäckfachs oder eines Lüftungskanals in einem Fahrzeug vorzusehen, da insbesondere für die Fahrerinformation bzw. die Passagierinformation hochwertige Geräte benötigt werden, die einerseits einfach an exponierten Stellen im Fahrzeug montiert werden müssen und andererseits gegen eine unberechtigte Entnahme und gegen eine Beschädigung während des Fahrbetriebs gesichert sein müssen.

### Zeichnung

Ausführungsbeispiele der Erfindung sind in der Zeichnung dargestellt und in der nachfolgenden Beschreibung näher erläutert. Es zeigen:
Figur 1 eine Seitenansicht eines erfindungsgemäßen elektrischen Gerätes in Form einer Anzeigevorrichtung an einer Halterung in einer Seitenansicht,
Figur 1a ein nur in einer ersten Verbindung in die Halterung eingehängtes elektrisches Gerät vor der Verriegelung in der zweiten Verbindung,
Figur 2 das elektrische Gerät gemäß der Figur 1 in einer Frontansicht,
Figur 3 eine Aufsicht auf eine Oberseite des elektrischen Geräts,
Figur 4 einen ersten Längsschnitt durch die Oberfläche des elektrischen Geräts,
Figur 5 einen weiteren Längsschnitt durch die Oberfläche des elektrischen Geräts,
Figur 6 eine Detailansicht einer Klinkenwippe,
Figur 7 eine erfindungsgemäße Halterung in einer Ansicht auf ihre Unterseite,
Figur 8 einen ersten Längsschnitt durch eine erfindungsgemäße Halterung und
Figur 9 einen zweiten Längsschnitt durch eine erfindungsgemäße Halterung.

### Beschreibung des Ausführungsbeispiels

Als ein erfindungsgemäßes elektrisches Gerät kann ein beliebiges elektrisches Gerät verwendet werden. Insbesondere ist eine Anordnung eines erfindungsgemäßen elektrischen Gerätes dann vorteilhaft, wenn eine Montage auf der Unterseite einer Trägerstruktur erfolgen soll, also eine Unterbaumontage. Dies ist z.B. der Fall bei Küchengeräten, bei Recheneinheiten, bei Radios, bei Fernsehgeräten oder Monitoren. Die erfindungsgemäße Anordnung an einer Halterung erlaubt dabei nicht nur eine einfache Montage, sondern auch eine leichte Austauschbarkeit, z.B. bei einem Defekt oder bei einer erforderlichen Wartung. Insbesondere ist auch eine Entnahme des elektrischen Gerätes je nach Bedarf möglich. Im Folgenden sind ein erfindungsgemäßes elektrisches Gerät und eine Halterung am Beispiel einer Anordnung eines Monitors in einem Fahrzeug erläutert. Die Art des Fahrzeugs ist beliebig, z.B. Flugzeug, Schiff oder Kraftfahrzeug. Insbesondere ist jedoch die Anordnung eines Monitors in einem Fahrzeug mit einer Vielzahl von Passagieren vorteilhaft, z.B. einem Reisebus, wobei einer Vielzahl von Passagieren ein möglichst großer und damit auch schwerer und folglich auch schwer zu montierender Bildschirm zur Verfügung gestellt wird, der der Vielzahl von Passagieren eine gute Bilddarstellung liefert.

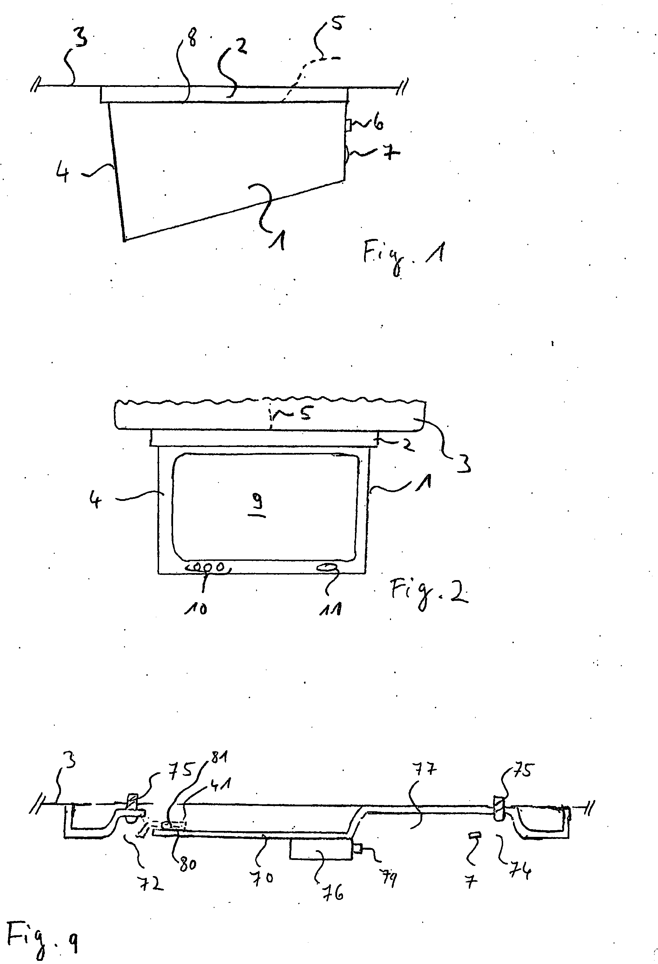

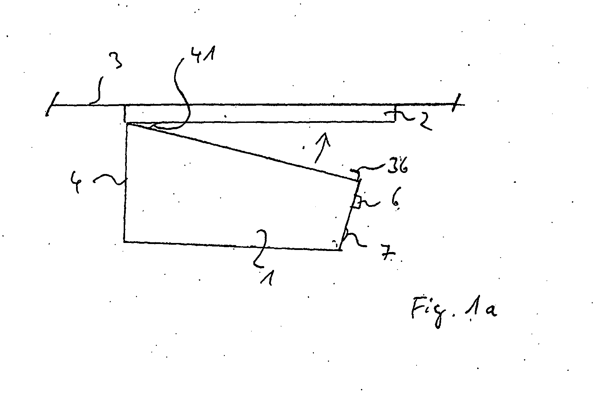

In der Figur 1 ist als ein elektrisches Gerät ein Monitor 1 dargestellt, der an einer Halterung 2 angeordnet ist. Die Halterung 2 ist wiederum an einem Träger 3 befestigt, so dass auch der Monitor 1 über die Halterung 2 von dem Träger 3 getragen wird. Auf einer Frontseite 4 ist eine in der Figur 1 nicht gezeigte Anzeige angeordnet, wobei eine ebenfalls nicht dargestellte Bilderzeugungseinheit in dem Monitor 1 angeordnet ist. Aus dem Träger 3 wird eine gestrichelt eingezeichnete Spannungs- und/oder Datenversorgungsleitung 5 in den Monitor 5 geführt. Die Befestigung des Monitors 1 an der Halterung 2 ist über ein Schloss 6 gesichert. Bei geöffnetem Schloss kann der Monitor 1 mit einem Druck auf die Druckfläche 7 aus der Halterung 2 gelöst werden. In einer Auflagefläche 8 liegt eine Oberseite des Monitors 1 an einer dem Träger 3 abgewandten Unterseite der Halterung 2 auf. In weiteren Ausführungsbeispielen ist auch möglich, den Träger 3 und die parallel hierzu verlaufende Halterung 2 vertikal anzubringen. Mit dem Monitor können Fernsehbilder, Videobilder und/oder Text- und Grafikinformationen dargestellt werden.

In der Figur 2 ist eine Frontansicht des Monitors 1 dargestellt. In die Frontseite 4 des Monitors 1 ist eine Anzeigefläche 9 einer Anzeigeeinheit angeordnet. Die Anzeigefläche 9 ist in einem ersten Ausführungsbeispiel die Anzeigefläche einer Kathodenstrahlröhre. Jedoch sind auch beliebige andere Arten von Anzeigetypen möglich, z.B. ein Plasmabildschirm oder eine Flüssigkristallzelle. In einem weiteren Ausführungsbeispiel sind an der Frontseite 4 Bedienelemente 10 zur Steuerung der Anzeige und/oder eine Luftschnittstelle 11 zum Empfangen von einer in der Figur 2 nicht gezeigten Fernbedienung zur Steuerung der Anzeige angeordnet. Bis auf den Bereich der Anzeigefläche 9, der Bedienelemente 10, der Luftschnittstelle 11 und der der Halterung 2 zuweisenden Oberseite des Monitors 1 ist eine Außenwand des Monitors mit einer Schutzschicht aus einem Kunststoffmaterial bedeckt, z.B. mit einer Silikonschicht oder in einem bevorzugten Ausführungsbeispiel mit einer Polyurethan-Weichschaumschicht. Die Weichschaumschicht ist vorzugsweise circa 10 mm dick. Hierdurch ist ein Schutz des Monitors 1 vor Beschädigung einerseits und ein Schutz von Passagieren des Fahrzeugs andererseits bei einem Stoß mit dem Monitor 1 gegeben. Der Träger 3 begrenzt z.B. ein Gepäckfach an dessen Unterseite als eine Bodenplatte des Gepäckfachs, so dass eine Montage des Monitors 1 unter dem Gepäckfach ermöglicht wird. Ebenso kann der Träger 3 ein Fahrzeugdach oder eine Begrenzung eines Lüftungskanals sein, wobei ein Luftstrom auf der der Halterung 2 abgewandten Seite des Trägers 3 führbar ist. Vorzugsweise sind die Spannungs- und/oder Datenversorgungsleitungen 5 zu dem Monitor 1 innerhalb des Trägers 3 geführt.

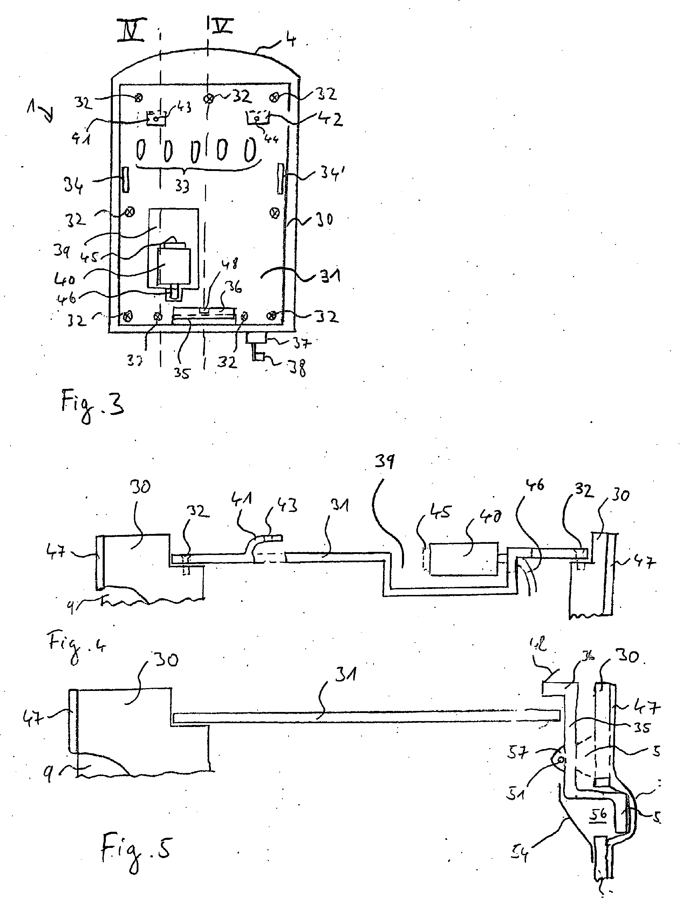

In der Figur 3 ist eine Aufsicht auf eine Oberseite des Monitors 1 dargestellt. Die in der Figur 3 gezeigte Oberseite weist in den Figuren 1 und 2 der dem Träger 3 abgewandten Seite der Halterung 2 zu. In einen Rahmen 30, der an den Rändern der Deckelplatte 31 eine Begrenzung und ein Gehäuse des Monitors 1 darstellt, ist eine Deckelplatte 31 eingelassen. Die Deckelplatte 31 ist über Schrauben 32 mit dem Rahmen 30 verbunden. Anstelle der Schrauben 32 können auch andere Verbindungen, z.B. Nietverbindungen oder Rastverbindungen, verwendet werden. Aus der Deckelplatte 31 erheben sich in einem der Frontseite 4 zuweisenden Bereich ein erster Haken 41 und ein zweiter Haken 42, die in eine hierfür vorgesehene Öffnung der Halterung 2 eingreifen, wenn der Monitor 1 an die Halterung 2. angesetzt ist. In den ersten Haken 41 ist ein erstes Loch 43 und in den zweiten Haken 42 ist ein zweites Loch 44 eingebracht. Die Löcher 43, 44 sind dafür vorgesehen, an der Halterung 2 angeformte Stifte aufzunehmen, die einer Sicherung des Monitors 1 gegenüber der Halterung 2 dienen. Ferner können auch nur ein Haken oder noch mehrere Haken an der Deckelplatte 31 angeformt sein.

In die Deckelplatte 31 sind zudem Lüftungsschlitze 33 eingebracht. In einem weiteren Ausführungsbeispiel sind ferner aus der Deckelplatte 31 Laschen 34, 34' in Richtung der Halterung 2 umgebogen, in der zur Aufnahme der Laschen 34, 34' entsprechende Öffnungen vorgesehen sind. Hierdurch ist in dieser Ausführungsform eine zusätzliche, seitliche Sicherung des Monitors 1 gegenüber der Halterung 2 gegeben.

Die Haken 41, 42 stellen mit den zugehörigen Aufnahmen in der Halterung 2 eine erste Verbindung zwischen dem Monitor 1 und der Halterung 2 dar. Der zweiten Verbindung dient eine Klinkenwippe 35, die an einer der Frontseite 4 abgewandten Kante der in den Rahmen 30 eingelassenen Deckelplatte 31 angeordnet ist. Die Klinkenwippe erstreckt sich mit einem Riegel 36 über die Deckelplatte 31, während die Klinkenwippe 35 auf der der Halterung 2 abgewandten Seite der Deckelplatte 31 innerhalb des Monitors 1 gelagert ist. Bei einem in die Halterung 2 eingesetzten Zustand umgreift der Riegel 36 eine hierfür vorgesehene Kante der Halterung 2 und hält diese gegen die Deckelplatte 31. Die Klinkenwippe 35 wird durch eine in der Figur 3 nicht gezeigte Feder in einer Ruhelage gehalten. Sie kann durch eine in der Figur 3 ebenfalls nicht gezeigte Handhabe aus der Ruhelage bewegt werden. Die Klinkenwippe 35 ist dabei durch ein Schloss 37 durch Drehen eines geeigneten Schlüssels 38 sicherbar und entsicherbar. Der Schlüssel 38 kann in einer bevorzugten Ausführungsform nur in der verriegelten Stellung des Schlosses 37 abgezogen werden.

An der der Halterung 2 zuweisenden Seite des Riegels 36 ist eine Blattfeder 48 angeformt, die dazu dient, bei einem Einsetzen des Monitors 1 die Klinkenwippe 35 gegenüber einer Rückstellfeder zurückzubiegen, damit der Riegel 36 nach einem Überstreichen einer Kante der Halterung 2 durch die Kraft der Rückstellfeder selbständig hinter der Kante einrasten kann. Für die Zuführung einer Versorgungsspannung zu dem Monitor 1 ist in eine Ausnahme 39 der Deckelplatte 31 ein Stecker 40 mit einem Anschlussbereich 45 eingebracht. Ein Kabel 46 führt zu einer in der Zeichnung nicht dargestellten Betriebselektronik des Monitors 1.

In einem in der Zeichnung nicht dargestellten Ausführungsbeispiel kann die Anzeigeeinheit auch in ein durch den Rahmen 30 gebildetes Gehäuse eingesetzt sein, so dass die Anzeigevorrichtung aus dem Rahmen 30 z.B. durch Abschrauben der Deckelplatte 31 entnommen werden kann. Hierdurch ist ein Austausch der Anzeigeeinheit möglich, ohne auch die mechanischen Bestandteile für die Halterung mit austauschen zu müssen.

In den Figuren 4 und 5 sind jeweils Schnittdarstellungen entlang der Linien IV und V gemäß der Figur 3 dargestellt. Hier und im Folgenden bezeichnen die gleichen Bezugszeichen auch die gleichen Elemente. Ergänzend zu der Darstellung in der Figur 3 ist in der Figur 4 eine Schutzschicht 47 aus einem Weichschaumrnaterial dargestellt, die an den Außenseiten auf den Rahmen 30 des Monitors 1 aufgebracht ist. Die Deckelplatte 31 ist als eine Platte ausgeführt, wobei die Materialdicke so gewählt ist, dass der Monitor ohne weiteres lediglich durch ein Einhängen der Haken 41, 42 in eine hierfür vorgesehene Aufnahme von dieser gehalten wird, ohne dass sich die Haken 41, 42 verbiegen können. Die Haken 41, 42 wird dabei vorzugsweise in der Fertigung durch einen Stanzprozess aus der Deckelplatte 31 ausgeschnitten und anschießend herausgebogen. Entsprechend wird auch die Ausnahme 39 durch einen Stanz- und einen anschließenden Verformungsprozess aus der Deckelplatte 31 ausgeformt.

In einem weiteren, in der Zeichnung nicht dargestellten Ausführungsbeispiel kann die Deckelplatte 31 auch einstückig mit dem Rahmen 30 ausgeführt sein. Der Stecker 40 und der Anschlussbereich 45 sind vorzugsweise so ausgeführt, dass eine Abschirmung elektromagnetischer Strahlung erfolgt, so dass einerseits Daten ungestört übertragen werden können und andererseits andere elektrische Systeme durch die Übertragung nicht gestört werden. Gleiches gilt für das Kabel 46. Sollte es z.B. aus Gründen der elektromagnetischen Abschirmung erforderlich sein, können auch mehrere Stecker in der Ausnahme 39 angeordnet werden.

In der Figur 5 ist der Aufbau der Klinkenwippe 35 in einer - seitlichen Ansicht dargestellt, die mit dem Riegel 36 eine Kante der Halterung 2 umgreift und auf der Deckelplatte 31 hält. Die Klinkenwippe 35 ist in einer Drehachse 51 beweglich gelagert, wobei die Drehachse 51 durch einen Kontaktbereich 52 in Form einer Erweiterung des Rahmens 30 parallel zu der Rückseite des Monitors 1 gehalten wird, an der das Schloss 37 angeordnet ist. Die Schutzschicht 47 erstreckt sich auch im Bereich der Druckfläche 7 über einen Hebel 53 mit dem die Klinkenwippe 35 gegen die Federkraft einer Rückstellfeder 54 beweglich ist. Bei einem Druck auf den Hebel 53 und einer Verschwenkung der Klinkenwippe 35 gibt der Riegel 36 die Kante der Halterung 2 frei. Der Hebel 53 ist dabei durch eine Öffnung 56 des Rahmens 30 geführt, so dass ein Druck durch die Schutzschicht 47 auf den Hebel 53 und infolgedessen ein Verschwenken des Hebels 53 ermöglicht wird. In einem ersten Ausführungsbeispiel erstreckt sich die Schutzschicht 47 plan über, der Öffnung 56. Eine Druckfläche zur Betätigung des Hebels 53 ist durch eine auf der Schutzschicht 47 angeordnete Markierung hervorgehoben. In einer weiteren Ausführungsform kann sich die Schutzschicht 47 über der Öffnung 56 auch über die Umgebung erheben. Die Rückstellfeder 54 ist an der der Deckelplatte 31 abgewandten Seite der Öffnung 56 an dem Rahmen 30 befestigt. Nach Loslassen des Hebels 53 wird die Klinkenwippe wieder in ihre Ausgangsstellung durch die Federkraft der Rückstellfeder 54 zurückbewegt. Ist die Kante freigegeben, kann der Monitor 1 in den Haken 41, 42 verschwenkt werden, so dass die Kante 50 an dem Riegel 36 vorbei bewegt wird. Anschließend kann der Monitor, der nun nur noch in der ersten Verbindung in den Haken 41, 42 mit der Halterung 2 verbunden ist, durch Herausführen der Haken 41, 42 aus einer Aufnahme der Halterung 2 von der Halterung 2 abgenommen werden. Umgekehrt verläuft die Befestigung in der Weise, dass der Monitor 1 mit den Haken 41, 42 in die Halterung 2 eingesetzt wird, anschließend der Monitor 1 mit dem Riegel 36 auf die Halterung 2 zu verschwenkt wird, bis die Blattfeder 48 die Kante erreicht, wobei die Kante über die Blattfeder 48 den Riegel 36 zurückdrückt, so dass dieser nach einem Vorbeigleiten an der Kante hinter der Kante der Halterung einrasten kann. Damit ist das hier als Monitor 1 ausgeführte elektrische Gerät mit der Halterung 2 über die aus dem Riegel 36 und der Kante 50 bestehende zweite -Verbindung verriegelt. Der Monitor 1 wird dabei von den in die Aufnahme in der Halterung eingebrachten Haken in der ersten Verbindung zusammen mit der zweiten Verbindung von der Halterung 2 getragen.

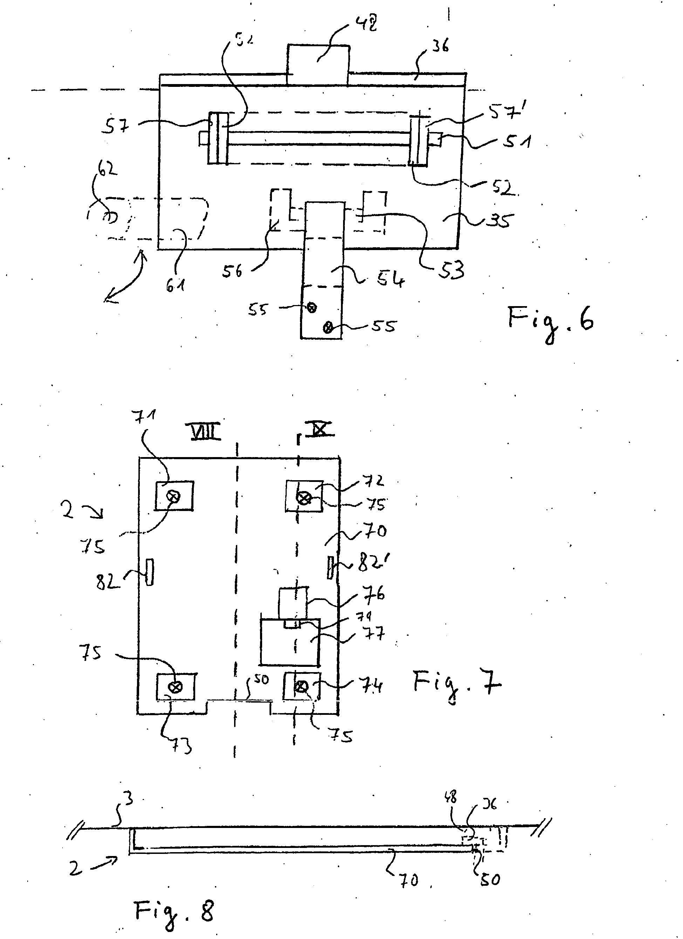

In der Figur 6 ist die Klinkenwippe im Detail dargestellt. Die Blattfeder 48 ist an dem Riegel 36 befestigt. Die Rückstellfeder 54 ist vorzugsweise über Schrauben 55 an dem Rahmen 30 angeordnet. Mit einer Erweiterung 57, 57' liegt die Klinkenwippe 35 an beiden Enden der Drehachse 51 mit den Kontaktbereichen 52 des Rahmens 30 auf. Die Drehachse 51 verläuft dabei sowohl durch Bohrlöcher in den Kontaktbereichen 52 als auch durch Bohrlöcher in den Erweiterungen 57, 57'. Die Klinkenwippe 35 ist gegen eine Bewegung gegen die Rückstellfeder durch einen gestrichelt eingezeichneten Sicherungsriegel 61 sicherbar, der mit dem Schloss 37 auf eine von dem Rahmen 30 abgewandte Seite der Klinkenwippe 35 bewegt werden kann. Damit ist der Riegel 36 in einer Position gesichert, in der die Kante 50 der Halterung 2 gehalten wird. Der Sicherungsriegel 61 ist in einer Achse 62 in Pfeilrichtung verschwenkbar, wobei die Achse 62 mit dem Schließzylinder des Schlosses 37 verbunden ist. Damit kann der Monitor 1 nicht ohne eine Betätigung des Schlosses 37 von der Halterung 2 abgenommen werden, wenn sich der Sicherungsriegel 61 in der in der Figur 6 gezeigten Position hinter der Klinkenwippe befindet.

In der Figur 7 ist eine Aufsicht auf die Halterung 2 von der Unterseite dargestellt, also aus Sicht ausgehend von der Position des Monitors 1 gemäß der Figur 1. In eine Platte 70 ist eine erste Vertiefung 71, eine zweite Vertiefung 72, eine dritte Vertiefung 73 und eine vierte Vertiefung 74 eingeformt. In den Vertiefungen sind jeweils Schrauben 75 angeordnet, mit denen die Halterung 2 mit dem Träger 3 verbunden ist. Die Vertiefungen 71, 72, 72, 74 werden vorzugsweise in einem Stanz- und einem anschließenden Verformungsprozess aus der Platte 70 der Halterung 2 ausgebildet. Die erste Vertiefung 71 und die zweite Vertiefung 72 bilden zugleich die Aufnahme für den ersten Haken 41 und den zweiten Haken 42, wobei der erste Haken 41 in die zweite Vertiefung 72 und der zweite Haken 42 in die erste Vertiefung 71 eingeführt wird. An der der ersten Vertiefung 71 und der zweiten Vertiefung 72 abgewandten Seitenkante der Platte 70 ist eine Ausnehmung eingebracht, die eine Kante 50 zur Aufnahme des Riegels 36 bildet. Ferner ist auf der Platte 70 ein Gegenstecker 76 angeordnet und eine Ausnahme 77 eingebracht, die den Stecker 40 aufnimmt. Optional sind in die Platte 70 Schlitze 82, 82' eingelassen, die zur Aufnahme der h.ervorstehenden Laschen 34, 34' der Deckelplatte 31 dienen.

Eine Montage des Monitors 1 erfolgt nun in der Weise, dass die Haken 41, 42 in die Vertiefungen 71, 72 eingeführt werden. Dieser Zustand ist vereinfacht in der Figur 1a dargestellt. Anschließend wird der Stecker 40 mit dem Gegenstecker 76 verbunden. Hierzu ist das Kabel 46 in der Weise flexibel ausgeführt, dass es ein Stück weit aus dem Monitor 1 herausgezogen werden kann. Anschließend wird der Monitor 1 in Pfeilrichtung gegen die Halterung 2 verschwenkt. Erreicht der Riegel 36 die Halterung 2, so rastet dieser, wie bereits zu der Figur 6 erläutert selbständig an der Kante 50 ein. Das Kabel 46 wird dabei wieder in das Gehäuse des Monitors 1 hineingeschoben. Auch der Gegenstecker 76 weist einen Steckerbereich 79 auf, der vorzugsweise bündig mit dem Anschlussbereich 45 des Steckers 40 abschließt.

Längsschnitte durch die Halterung 2 gemäß der gestrichelten Linien VIII und IX in der Figur 7 sind in den Figuren 8 und 9 dargestellt. In der Figur 8 ist insbesondere die Kante 50 sichtbar, die von dem gestrichelt eingezeichneten Riegel 36 umgriffen wird. In einem bevorzugten Ausführungsbeispiel kann die Kante 50 auf einer der bei dem Einrasten anliegenden Blattfeder 48 zuweisenden Seite angeschrägt werden.

Figur 9 zeigt einen Längsschnitt durch die Halterung 2 im Bereich des Gegensteckers 76. Der Gegenstecker 76 ist vorzugsweise durch in der Figur 9 nicht gezeigte Schrauben auf der Platte 70 montiert. An den Rändern ist die Platte 70 zu dem Träger 3 hin umgebogen. Die Ausnahme 77 ist vorzugsweise durch einen Steg 78 von der vierten Vertiefung 74 getrennt.

Gestrichelt ist der erste Haken 41 eingezeichnet, der nach einem Einsetzen in die zweite Vertiefung 72 auf einer Auflagefläche 80 der Platte 70 auf der der Deckelplatte 31 abgewandten Seite der Platte 70 aufliegt. Auf der Auflagefläche 80 ist ein Stift 81 angeordnet, der in das erste Loch 43 des ersten Hakens 41 einrastet. Zum Aushängen des Monitors 1 auf der Halterung muss der erste Haken 41 über den Stift 81 gehoben werden, so dass nach einem Lösen der Klinkenwippe 35 der Monitor nicht aus der Halterung 2 herausfallen kann. Hierdurch ist eine zusätzliche Sicherung gegeben. In einem bevorzugten Ausführungsbeispiel ist der erste Haken um den Stift 81 geringfügig verschwenkbar, so dass nach einem Einhängen des ersten Hakens 41 auf die Auflagefläche 80 dieser noch verschwenkt werden kann, so dass der Stecker 40 und der Gegenstecker 76 noch verbunden werden können.

## Patentansprüche

1. Elektrisches Gerät zum Anbringen an einer Halterung und eine Halterung hierfür, insbesondere in einem Fahrzeug, wobei das elektrischen Gerät (1) mit der Halterung (2) in einer ersten Verbindung über mindestens einen Haken (41, 42) verbunden ist, wobei das elektrische Gerät (1) gegenüber der Halterung (2) in-dem mindestens einen Haken (41, 42) gegenüber der Halterung (2, 71, 72) schwenkbar ist, wobei das elektrische Gerät (1) in einer zweiten Verbindung (36, 50) an der Halterung (2) verriegelbar ist, **dadurch gekennzeichnet, dass** das elektrische Gerät (1) mit einem verschwenkbar angeordneten Riegel (36) mit der Halterung (2) verriegelbar ist, dass der verschwenkbare, vorzugsweise an dem elektrischen Gerät (1) angeordnete Riegel (36) an einer Klinkenwippe (35) angeordnet ist und dass die Bewegung der Klinkenwippe (35) mit einem Sicherungsriegel (61) sicherbar ist, wobei eine Achse (62) des Sicherungsriegels (61) mit einem Schließzylinder eines Schlosses (37) verbunden ist.

2. Elektrisches Gerät und Halterung nach Anspruch 1, **dadurch gekennzeichnet, dass** der mindestens eine Haken (41, 42) an dem elektrischen Gerät (1, 31) angeordnet ist und dass an der Halterung (2) eine Aufnahme (71, 72, 80) für den mindestens einen Haken (41, 42) ausgebildet ist

3. Elektrisches Gerät und Halterung nach Anspruch 2, **dadurch gekennzeichnet, dass** an der Aufnahme (71, 72) ein Stift (81) angeordnet ist, dass in den Haken (41, 42) ein Loch (43, 44) zur Aufnahme des Stiftes (81) eingebracht ist und dass der Haken (41, 42) durch den Stift (81) in der Aufnahme (71, 72) gehalten ist.

4. Elektrisches Gerät und Halterung nach einem der vorhergehenden Ansprüche, **dadurch gekennzeichnet, dass** das elektrische Gerät (1) mit einer Oberseite (31) an einer Unterseite (70) der Halterung (2) anbringbar ist.

5. Elektrisches Gerät und Halterung nach einem der vorhergehenden Ansprüche, **dadurch gekennzeichnet, dass** der Riegel (36) eine Kante (50) der Halterung (2) umgreift.

6. Elektrisches Gerät und Halterung nach einem der vorhergehenden Ansprüche, **dadurch gekennzeichnet, dass** an dem elektrischen Gerät eine Rastvorrichtung angeordnet ist, der bei einem Verschwenken des elektrischen Geräts auf die Halterung automatisch verriegelnd an der Halterung (2) einrastet.

7. Elektrisches Gerät und Halterung nach einem der vorhergehenden Ansprüche, **dadurch gekennzeichnet, dass** das elektrische Gerät (1) mindestens ein Gehäuse (30) und ein elektrisches Bauteil (9) aufweist, dass das elektrische Bauteil (9) in dem Gehäuse (30) befestigt ist und dass der mindestens eine Haken (41, 42) an dem Gehäuse (30) angeordnet ist.

8. Elektrisches Gerät und Halterung nach einem der vorhergehenden Ansprüche, **dadurch gekennzeichnet, dass** das Gehäuse (30) des elektrischen Geräts (1) zumindest teilweise mit einer Schutzschicht (47) aus einem Kunststoffmaterial bedeckt ist.

9. Elektrisches Gerät und Halterung nach einem der vorhergehenden Ansprüche, **dadurch gekennzeichnet, dass** an einer der Halterung (2) zuweisenden Seite des elektrischen Geräts (1) ein Steckeranschluss (40) angeordnet ist.

10. Elektrisches Gerät und Halterung nach einem der vorhergehenden Ansprüche, **dadurch gekennzeichnet, dass** das elektrische Gerät (1) mindestens eine Anzeigevorrichtung (9) vorzugsweise eine Kathodenstrahl-Röhrenanzeige, aufweist.

## Claims

1. Electrical device to be mounted on a mount and a mount for this purpose, in particular in a vehicle, with the electrical device (1) being connected to the mount (2) in a first connection via at least one hook (41, 42), it being possible to pivot the electrical device (1) relative to the mount (2, 71, 72) in the at least one hook (41, 42), it being possible to lock the electrical device (1) to the mount (2) in a second connection (36, 50), **characterized in that** the electrical device (1) can be locked to the mount (2) by way of a pivotably arranged bolt (36), **in that** the pivotable bolt (36), which is preferably arranged on the electrical device (1), is arranged on a catch rocker (35), and **in that** the movement of the catch rocker (35) can be prevented by way of a securing bolt (61), with a shaft (62) of the securing bolt (61) being connected to a locking cylinder of a lock (37).

2. Electrical device and mount according to Claim 1, **characterized in that** the at least one hook (41, 42) is arranged on the electrical device (1, 31), and **in that** a holder (71, 72, 80) for the at least one hook (41, 42) is formed on the mount (2).

3. Electrical device and mount according to Claim 2, **characterized in that** a pin (81) is arranged on the holder (71, 72), **in that** a hole (43, 44) for receiving the pin (81) is made in the hook (41, 42), and **in that** the hook (41, 42) is held in the holder (71, 72) by the pin (81).

4. Electrical device and mount according to one of the preceding claims, **characterized in that** the electrical device (1) can be mounted, by way of an upper face (31), on a lower face (70) of the mount (2).

5. Electrical device and mount according to one of the preceding claims, **characterized in that** the bolt (36) surrounds an edge (50) of the mount (2).

6. Electrical device and mount according to one of the preceding claims, **characterized in that** a latching apparatus is arranged on the electrical device, the said latching apparatus, when the electrical device pivots towards the mount, latching in on the mount (2) such that it is automatically locked.

7. Electrical device and mount according to one of the preceding claims, **characterized in that** the electrical device (1) has at least one housing (30) and an electrical component (9), **in that** the electrical component (9) is fixed in the housing (30), and **in that** the at least one hook (41, 42) is arranged on the housing (30).

8. Electrical device and mount according to one of the preceding claims, **characterized in that** the housing (30) of the electrical device (1) is at least partly covered by a protective layer (47) comprising a plastic material.

9. Electrical device and mount according to one of the preceding claims, **characterized in that** a plug connection (40) is arranged on a side of the electrical device (1) which faces the mount (2).

10. Electrical device and mount according to one of the preceding claims, **characterized in that** the electrical device (1) has at least one display apparatus (9), preferably a cathode ray tube display.

## Revendications

1. Appareil électrique destiné à être monté sur un support et support à cet effet, notamment dans un véhicule, l'appareil électrique (1) étant connecté au support (2) dans une première connexion par le biais d'au moins un crochet (41, 42), l'appareil électrique (1) pouvant pivoter par rapport au support (2, 71, 72) dans l'au moins un crochet (41, 42), l'appareil électrique (1) pouvant être verrouillé au support (2) dans une deuxième connexion (36, 50), **caractérisés en ce que** l'appareil électrique (1) peut être verrouillé au support (2) avec un verrou (36) disposé de manière pivotante, **en ce que** le verrou (36) disposé de manière pivotante, de préférence sur l'appareil électrique (1), est disposé sur une bascule à cliquet (35) et **en ce que** le mouvement de la bascule à cliquet (35) peut être bloqué par un verrou de blocage (61), un axe (62) du verrou de blocage (61) étant connecté à un cylindre de verrou d'une serrure (37).

2. Appareil électrique et support selon la revendication 1, **caractérisés en ce que** l'au moins un crochet (41, 42) est disposé sur l'appareil électrique (1, 31) et **en ce qu'**un logement (71, 72, 80) pour l'au moins un crochet (41, 42) est réalisé sur le support (2).

3. Appareil électrique et support selon la revendication 2, **caractérisés en ce qu'**une goupille (81) est disposée sur le logement (71, 72), **en ce qu'**un trou (43, 44) pour recevoir la goupille (81) est pratiqué dans le crochet (41, 42) et **en ce que** le crochet (41, 42) est maintenu par la goupille (81) dans le logement (71, 72).

4. Appareil électrique et support selon l'une quelconque des revendications précédentes, **caractérisés en ce que** l'appareil électrique (1) peut être monté sur un côté inférieur (70) du support (2) par un côté supérieur (31).

5. Appareil électrique et support selon l'une quelconque des revendications précédentes, **caractérisés en ce que** le verrou (36) vient en prise autour d'une arête (50) du support (2).

6. Appareil électrique et support selon l'une quelconque des revendications précédentes, **caractérisés en ce qu'**un dispositif d'encliquetage est disposé sur l'appareil électrique, lequel s'encliquète sur le support en se verrouillant automatiquement au support (2) lors du pivotement de l'appareil électrique.

7. Appareil électrique et support selon l'une quelconque des revendications précédentes, **caractérisés en ce que** l'appareil électrique (1) présente au moins un boîtier (30) et un composant électrique (9), **en ce que** le composant électrique (9) est fixé dans le boîtier (30) et **en ce que** l'au moins un crochet (41, 42) est disposé sur le boîtier (30).

8. Appareil électrique et support selon l'une quelconque des revendications précédentes, **caractérisés en ce que** le boîtier (30) de l'appareil électrique (1) est au moins en partie recouvert par une couche de protection (47) en matériau synthétique.

9. Appareil électrique et support selon l'une quelconque des revendications précédentes, **caractérisés en ce que** l'on dispose un raccord à fiches (40) sur un côté de l'appareil électrique (1) tourné vers le support (2).

10. Appareil électrique et support selon l'une quelconque des revendications précédentes, **caractérisés en ce que** l'appareil électrique (1) présente au moins un dispositif d'affichage (9), de préférence un affichage par tube à rayons cathodiques.
